# EUROPEAN PATENT SPECIFICATION

(11) **EP 4 446 207 B1**
(45) Date of publication and mention of the grant of the patent: **13.08.2025**
(21) Application number: 23167963.0
(22) Date of filing: 14.04.2023
(51) Int. Cl.: B62J 11/04

(54) **ADJUSTABLE BIKE BOTTLE HOLDER**
VERSTELLBARER FAHRRADFLASCHENHALTER
PORTE-BOUTEILLES AJUSTABLE POUR BICYCLETTE

(43) Date of publication of application: 16.10.2024
(73) Proprietor: Nuvo Enterprise Co., Ltd., Changhua Hsien (TW)
(72) Inventor: Shih, Ho-Jen, CHANGHUA HSIEN (TW); Yang, Hsing-Huan, CHANGHUA HSIEN (TW); Wang, Pen-Li, CHANGHUA HSIEN (TW)
(74) Representative: Lang, Christian

(56) References cited:
- EP-A1- 3 085 607
- CN-U- 204 095 976
- CN-U- 204 821 850
- US-A1- 2017 088 209

## Description

### BACKGROUND of INVENTION

### 1. Field of Invention

The present invention relates to an adjustable bike bottle holder, particularly a bike bottle holder for both left- and right-hand use.

### 2. Description of the Related Art

A rider loses a lot of fluids during the cycling sport. Therefore, it is extraordinarily important for him to drink water timely. For this purpose, bike bottle holders are made to be mounted on bicycles.

A conventional bike bottle holder comprises a mount and a frame-shaped structure having an opening through which the water bottle is taken out and put in. In use, the bottle is put on the holder through the opening and the neck of the bottle is fastened by the mount. Thus, the bottle can be fixed on the bicycle by means of the bike bottle holder. During the drive, the driver can take out the bottle through the opening and drink water.

The direction of the opening is fixed and not adjustable according to the left- or right-hand use. Thus, the bottle may be not taken out or put in easily through the opening if the user's handedness differs from the direction of the opening. In the last resort, an excessive interference of the frame-shaped structure may impact the rider's safety during the ride.

Examples of adjustable bike holders are found in documents CN 204 821 850 U, disclosing the features of the preamble of claim 1; US 2017/088209 A1, CN 204 095 976 U and EP 3 085 607 A1.

### SUMMARY OF THE INVENTION

An objective of present invention is to provide an adjustable bike bottle holder for both left- and right-hand use.

To achieve these and other objects of the present invention, an adjustable bike bottle holder is provided. The bike bottle holder comprises a main body, a first retaining element and a second retaining element. The main body has a front face and a rear face. Two fitting holes are arranged on the main body in such a way that the two fitting holes go through the front face and the rear face consecutively. A screw (40) is to be inserted into the fitting holes. The main body is provided with a base which protrudes forwards from the lower side of the main body. The first retaining element has a first upper fixing piece and a first lower fixing piece which are disposed at a distance. The first upper fixing piece and the first lower fixing piece are arranged one after another in such a way that the first upper fixing piece is located in front of the first lower fixing piece. The first upper fixing piece and the first lower fixing piece are respectively provided with a first adjusting elongated hole going through the respective fixing piece. The first upper fixing piece and the first lower fixing piece are connected commonly to a unilaterally encircling first clamping piece at their one end. The second retaining element has a second upper fixing piece and a second lower fixing piece which are disposed at a distance. The second upper fixing piece and the second lower fixing piece are arranged one after another in such a way that the second upper fixing piece is located behind the second lower fixing piece. The second upper fixing piece and the second lower fixing piece are respectively provided with a second adjusting elongated hole going through the respective fixing piece. The second upper fixing piece and the second lower fixing piece are connected commonly to a unilaterally encircling second clamping piece (34) at their far end in relation to the first clamping piece.

The adjustable bike bottle holder is characterized by that the first retaining element and the second retaining element are vertically adjustable depending on the left- or right-hand use. To adjust the height, the screw (40) is to be loosened in order to adjust downwards the first retaining element and adjust upwards the second retaining element, or to adjust upwards the first retaining element and adjust downwards the second retaining element, or to set the first retaining element and the second retaining element to the same height. After the height adjustment, the screw (40) is to be tightened again. Thus, the driver can take a water container directly from the left side, the right side or from above depending on his left- or right-hand use. Taking out or putting the water container in the bike bottle holder is thus relieved, ensuring a safe ride. Moreover, the bike bottle holder is suitable both for left-handers and right-handers and can thus be broadly used, which is advantageous for gaining a great market share.

Other objects, advantages, and novel features of invention will become more apparent from the following detailed description when taken in conjunction with the accompanying drawings.

### BRIEF DESCRIPTION of DRAWINGS

FIG. 1 is a perspective view of a preferred embodiment of an assembled adjustable bike bottle holder according to the present invention.
FIG. 2 is an explosive view of the adjustable bike bottle holder in Fig. 1.
FIG. 3 is a perspective view of the assembled adjustable bike bottle holder in Fig. 1 from another viewing angle.
FIG. 4 is a schematic figure showing the adjustable bike bottle holder in Fig. 1 mounted on a bike.
FIG. 5 is a sectional view showing a water container fastened by the adjustable bike bottle holder in Fig. 1.
FIG. 6 is a schematic figure showing a first possibility to take out a water container from a height-adjusted bike bottle holder according to the present invention.
FIG. 7 is a schematic figure showing a second possibility to take out a water container from a height-adjusted bike bottle holder according to the present invention.
FIG. 8 is a schematic figure showing a third possibility to take out a water container from a height-adjusted bike bottle holder according to the present invention.

### DETAILED DESCRIPTION OF THE PREFERRED EMBODIMENT

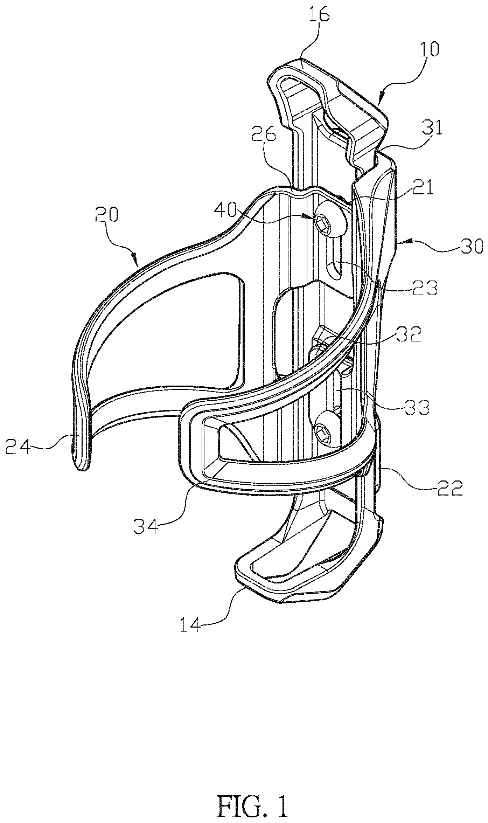

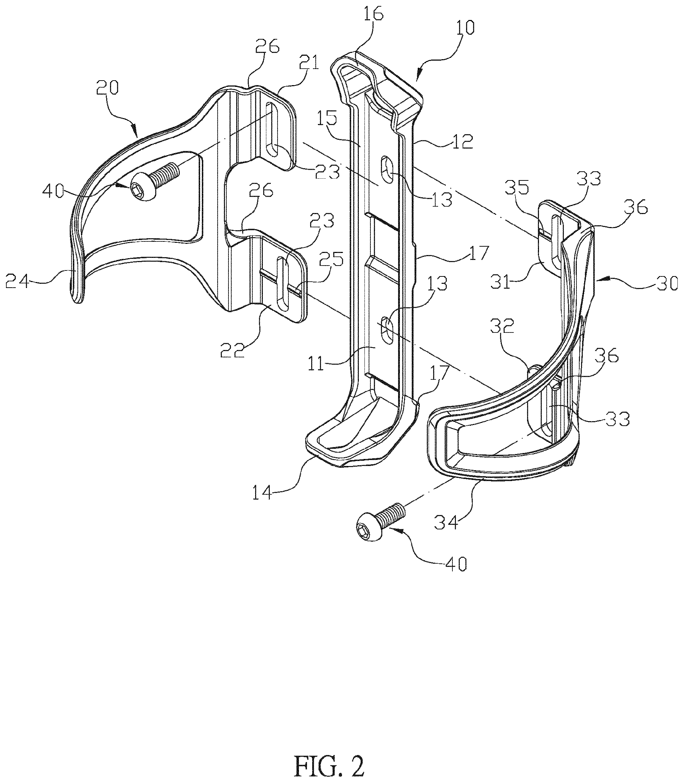

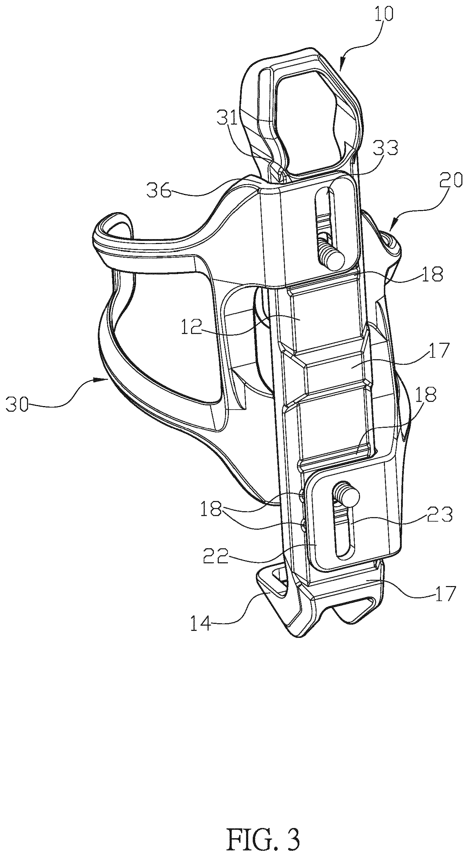

First, please refer to FIG. 1 to FIG. 3, an adjustable bike bottle holder according to the invention comprises a main body10, a first retaining element 20 and a second retaining element 30. The main body 10 has a front face 11 and a rear face 12. Two fitting holes 13 are arranged on the main body 10 in such a way that the two fitting holes 13 go through the front face 11 and the rear face 12 consecutively. A screw 40 is to be inserted into the fitting holes 13. The main body 10 is provided with a base 14 which protrudes forwards from the lower side of the main body 10. The first retaining element 20 has a first upper fixing piece 21 and a first lower fixing piece 22 which are disposed at a distance. The first upper fixing piece 21 and the first lower fixing piece 22 are arranged one after another in such a way that the first upper fixing piece 21 is located in front of the first lower fixing piece 22. The first upper fixing piece 21 and the first lower fixing piece 22 are respectively provided with a first adjusting elongated hole 23 going through the respective fixing piece 21, 22. The first upper fixing piece 21 and the first lower fixing piece 22 are connected commonly to a unilaterally encircling first clamping piece 24 at their one end. The second retaining element 30 has a second upper fixing piece 31 and a second lower fixing piece 32 which are disposed at a distance. The second upper fixing piece 31 and the second lower fixing piece 32 are arranged one after another in such a way that the second upper fixing piece 31 is located behind the second lower fixing piece 32. The second upper fixing piece 31 and the second lower fixing piece 32 are respectively provided with a second adjusting elongated hole 33 going through the respective fixing piece 31, 32. The second upper fixing piece 31 and the second lower fixing piece 32 are connected commonly to a unilaterally encircling second clamping piece 34 at their far end in relation to the first clamping piece 24.

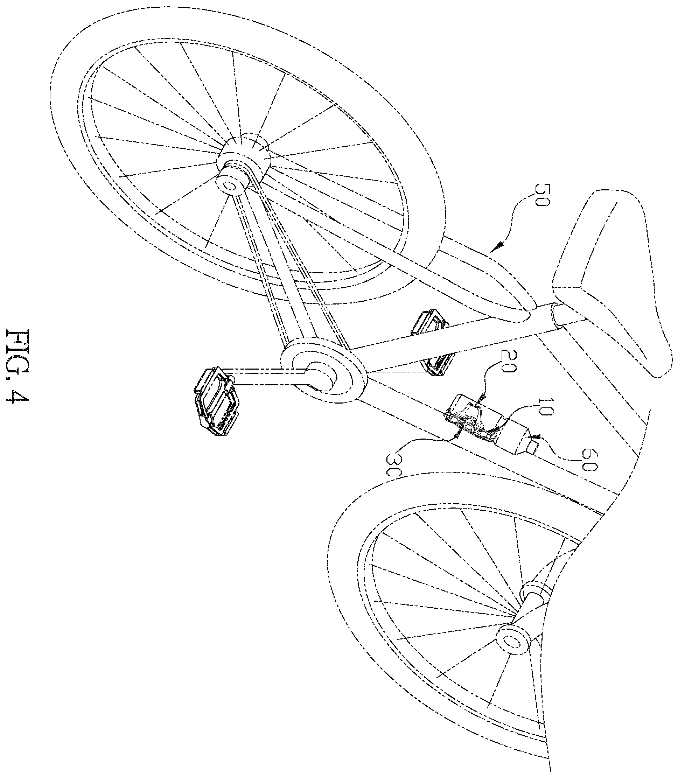

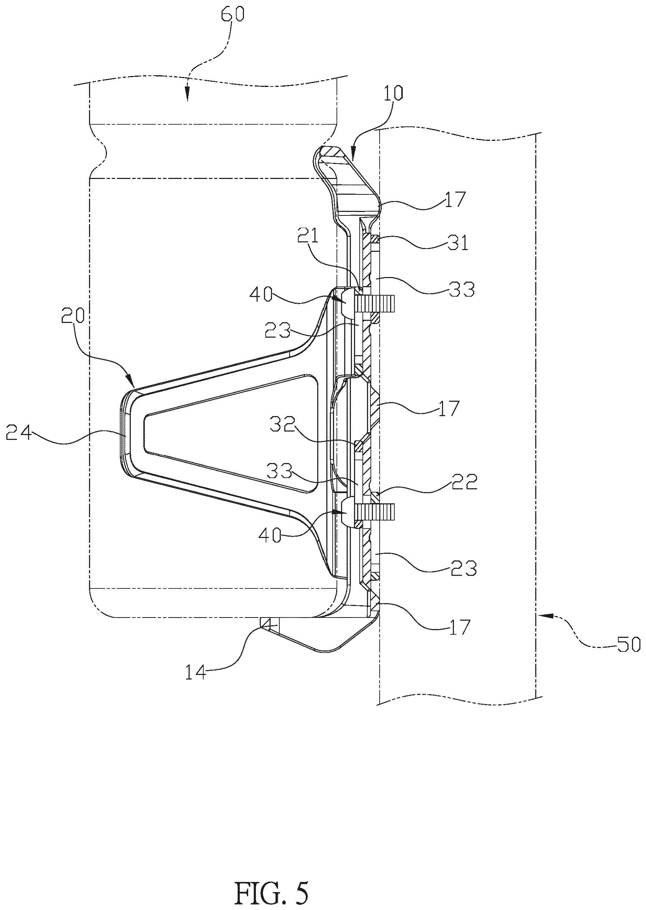

Please refer to FIG. 1, FIG. 3, FIG. 4 and Fig. 5. The first retaining element 20 is arranged on one side of the main body 10 in such a way that the first upper fixing piece 21 and the first lower fixing piece 22 abut respectively on the front face 11 and the rear face 12 of the main body 10 and the two first adjusting elongated holes 23 are aligned with the two fitting holes 13. The second retaining element 30 is arranged on the other side of the main body 10 in such a way that the second upper fixing piece 31 and the second lower fixing piece 32 abut respectively on the rear face 12 and the front face 11 of the main body 10 and the two second adjusting elongated holes 33 are aligned with the two fitting holes 13. The screw 40 is inserted through the fitting holes 13, the first adjusting elongated holes 23 and the second adjusting elongated holes 33 consecutively and then tightened on a bicycle frame of a bicycle 50. Thereby, the main body 10, the first retaining element 20 and the second retaining element 30 can be connected with each other by means of the screw 40. The structure consisting of the main body 10, the first retaining element 20 and the second retaining element 30 can be mounted on the bicycle 50 without difficulty thanks to the screw 40. By doing this, a space for receiving a water container 60 is formed by the assembled structure consisting of the main body 10, the first retaining element 20 and the second retaining element 30. By loosening the screw 40 and moving it in the first adjusting elongated holes 23 and the second adjusting elongated holes 33, it is possible to adjust the height of the first retaining element 20 or the second retaining element 30 depending on the left- or right-hand use.

According to the invention, the main body 10 is an elongated body extending vertically.

According to the invention, a limiting channel 15 is arranged on the front surface of the main body 10 in such a way that the front face **11** can be formed on the bottom of the limiting channel 15. The first upper fixing piece 21 and the second lower fixing piece 32 are to be inserted into the limiting channel 15 to achieve a higher stability of the first retaining element 20 and the second retaining element 30 when adjusting the height of these retaining elements.

According to the invention, a fastening piece 16 is arranged on the front face of the main body 10 in such a way that the fastening piece 16 protrudes forwards. The fastening piece 16 is used to lock the annular neck of the water container 60.

According to the invention, a plurality of protrusions 17 is arranged on the rear face 12 of the main body 10 at a distance to each other. The protrusions 17 are used to elevate the main body 10.

According to the invention, a plurality of grooves 18 is arranged on the rear face 12 of the main body 10 at a horizontal distance to each other. At least a horizontal rib 25, 35 is arranged respectively on the first lower fixing piece 22 and the second upper fixing piece 31. By bringing the horizontal rib 25, 35 to engage in the grooves 18 at different heights, the first retaining element 20 and the second retaining element 30 can be fine-adjusted in multiple steps.

According to the invention, the first upper fixing piece 21 and the first lower fixing piece 22 are connected to the first clamping piece 24 respectively by means of a corner piece 26. The corner piece 26 of the first lower fixing piece 22 is larger than the corner piece 26 of the first upper fixing piece 21. The first upper fixing piece 21 can be smoothly located in front of the first lower fixing piece 22 thanks to the size difference of the corner pieces 26.

According to the invention, the second upper fixing piece 31 and the second lower fixing piece 32 are connected to the second clamping piece 34 respectively by means of a corner piece 36. The corner piece 36 of the second upper fixing piece 31 is larger than the corner piece 36 of the second lower fixing piece 32. The second lower fixing piece 32 can be smoothly located in front of the second upper fixing piece 31 thanks to the size difference of the corner pieces 36.

According to the invention, the water container 60 is a water bottle.

According to the invention, the water container 60 is a PET bottle.

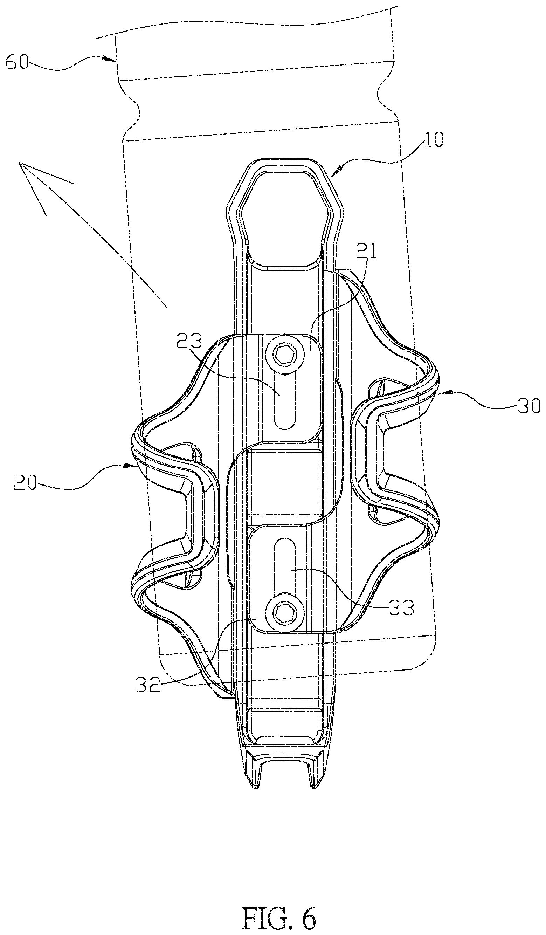

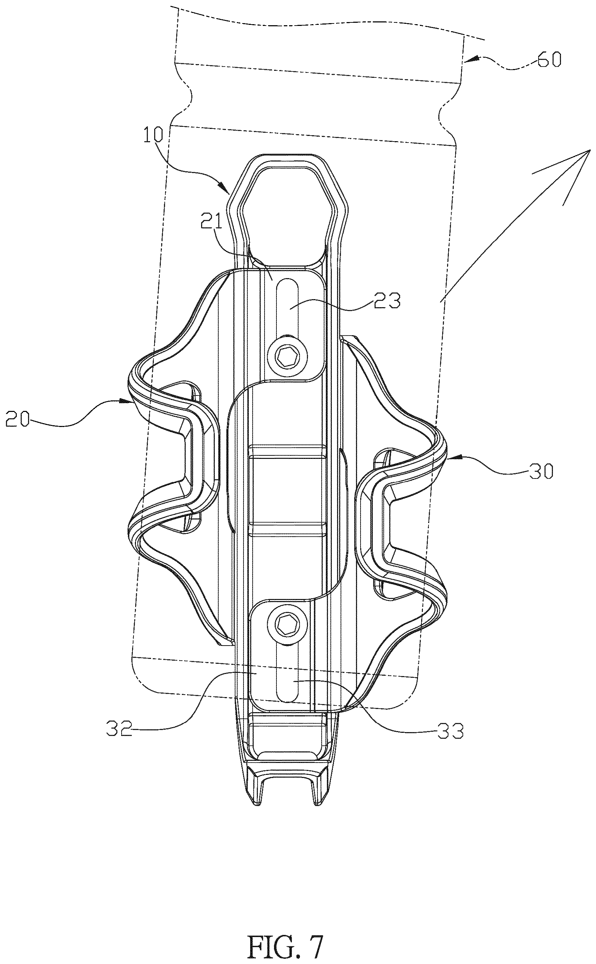

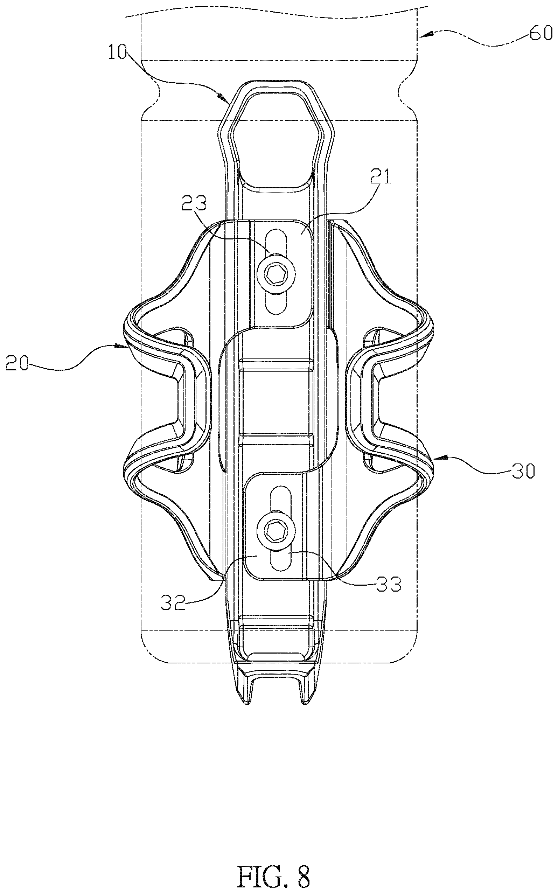

The adjustable bike bottle holder is characterized by that the first retaining element 20 and the second retaining element 30 are vertically adjustable depending on the left- or right-hand use. To adjust the height, the screw 40 is to be loosened in order to adjust downwards the first retaining element 20 and adjust upwards the second retaining element 30 (see Fig. 6), or to adjust upwards the first retaining element 20 and adjust downwards the second retaining element 30 (see Fig. 7), or to set the first retaining element 20 and the second retaining element 30 to the same height (see Fig. 8). After the height adjustment, the screw 40 is to be tightened again. Thus, the driver can take the water container 60 directly from the left side, the right side or from above depending on his left- or right-hand use. Therefore, taking out or putting the water container 60 in the bike bottle holder is relieved, ensuring a safe ride. Moreover, the bike bottle holder is suitable both for left-handers and right-handers and can thus be broadly used, which is advantageous for gaining a great market share.

Although the present invention has been explained in relation to its preferred embodiment, it is to be understood that many other possible modifications and variations can be made without departing from the scope of invention as hereinafter claimed.

## Claims

1. An adjustable bike bottle holder comprising a main body (10), a first retaining element (20) and a second retaining element (30), **characterized in that**:
- The main body (10) has a front face (11) and a rear face (12). Two fitting holes (13) are arranged on the main body (10) in such a way that the two fitting holes (13) go through the front face (11) and the rear face (12) consecutively. A screw (40) is to be inserted into the fitting holes (13). The main body (10) is provided with a base (14) which protrudes forwards from the lower side of the main body (10).
- The first retaining element (20) has a first upper fixing piece (21) and a first lower fixing piece (22) which are disposed at a distance. The first upper fixing piece (21) and the first lower fixing piece (22) are arranged one after another in such a way that the first upper fixing piece (21) is located in front of the first lower fixing piece (22). The first upper fixing piece (21) and the first lower fixing piece (22) are respectively provided with a first adjusting elongated hole (23) going through the respective fixing piece (31), (32). The first upper fixing piece (21) and the first lower fixing piece (22) are connected commonly to a unilaterally encircling first clamping piece (24) at their one end.
- The second retaining element (30) has a second upper fixing piece (31) and a second lower fixing piece (32) which are disposed at a distance. The second upper fixing piece (31) and the second lower fixing piece (32) are arranged one after another in such a way that the second upper fixing piece (31) is located behind the second lower fixing piece(32). The second upper fixing piece (31) and the second lower fixing piece (32) are respectively provided with a second adjusting elongated hole (33) going through the respective fixing piece (31), (32). The second upper fixing piece (31) and the second lower fixing piece (32) are connected commonly to a unilaterally encircling second clamping piece (34) at their far end in relation to the first clamping piece (24).
- The first retaining element (20) is arranged on one side of the main body (10) in such a way that the first upper fixing piece (21) and the first lower fixing piece (22) abut respectively on the front face (11) and the rear face (12) of the main body (10) and the two first adjusting elongated holes (23) are aligned with the two fitting holes (13). The second retaining element (30) is arranged on the other side of the main body (10) in such a way that the second upper fixing piece (31) and the second lower fixing piece (32) abut respectively on the rear face (12) and the front face (11) of the main body (10) and the two second adjusting elongated holes (33) are aligned with the two fitting holes (13). The screw (40) is inserted through the fitting holes (13), the first adjusting elongated holes (23) and the second adjusting elongated holes (33) consecutively and then tightened on a bicycle frame of a bicycle (50). Thereby, the main body (10), the first retaining element (20) and the second retaining element (30) can be connected with each other by means of the screw (40). The structure consisting of the main body (10), the first retaining element (20) and the second retaining element (30) can be mounted on the bicycle (50) without difficulty thanks to the screw (40). By doing this, a space for receiving a water container (60) is formed by the assembled structure consisting of the main body (10), the first retaining element (20) and the second retaining element (30). The adjustable bike holder being **characterized in that** by loosening the screw (40) and moving it in the first adjusting elongated holes (23) and the second adjusting elongated holes (33), it is possible to adjust the height of the first retaining element (20) or the second retaining element (30) depending on the left- or right-hand use.

2. The adjustable bike bottle holder as claimed in claim 1, wherein the main body (10) is an elongated body extending vertically.

3. The adjustable bike bottle holder as claimed in claim 1, wherein a limiting channel (15) is arranged on the front surface (11) of the main body (10) in such a way that the front face (11) can be formed on the bottom of the limiting channel (15). The first upper fixing piece (21) and the second lower fixing piece (32) are to be inserted into the limiting channel (15) to achieve a higher stability of the first retaining element (20) and the second retaining element (30) when adjusting the height of these retaining elements.

4. The adjustable bike bottle holder as claimed in claim 1, wherein a fastening piece (16) is arranged on the front face (11) of the main body (10) in such a way that the fastening piece (16) protrudes forwards.

5. The adjustable bike bottle holder as claimed in claim 1, wherein a plurality of protrusions (17) is arranged on the rear face (12) of the main body (10) at a distance to each other and is used to elevate the main body (10).

6. The adjustable bike bottle holder as claimed in claim 1, wherein a plurality of grooves (18) is arranged on the rear face (12) of the main body (10) at a horizontal distance to each other. At least a horizontal rib (25), (35) is arranged respectively on the first lower fixing piece (22) and the second upper fixing piece (31). By bringing the horizontal rib (25),(35) to engage in the grooves (18) at different heights, the first retaining element (20) and the second retaining element (30) can be fine-adjusted in multiple steps.

7. The adjustable bike bottle holder as claimed in claim 1, wherein the first upper fixing piece (21) and the first lower fixing piece (22) are connected to the first clamping piece (24) respectively by means of a corner piece (26). The corner piece (26) of the first lower fixing piece (22) is larger than the corner piece (26) of the first upper fixing piece (21). The first upper fixing piece (21) can be smoothly located in front of the first lower fixing piece (22) thanks to the size difference of the corner pieces (26).

8. The adjustable bike bottle holder as claimed in claim 1, wherein the second upper fixing piece (31) and the second lower fixing piece (32) are connected to the second clamping piece (34) respectively by means of a corner piece (36). The corner piece (36) of the second upper fixing piece (31) is larger than the corner piece (36) of the second lower fixing piece (32). The second lower fixing piece (32) can be smoothly located in front of the second upper fixing piece (31) thanks to the size difference of the corner pieces (36).

9. The adjustable bike bottle holder as claimed in claim 1, wherein the water container (60) is a water bottle.

10. The adjustable bike bottle holder as claimed in claim 1, wherein the water container (60) is a PET bottle.

## Patentansprüche

1. Verstellbarer Fahrradflaschenhalter, der einen Hauptkörper (10), ein erstes Halteelement (20) und ein zweites Halteelement (30) umfasst, **dadurch gekennzeichnet, dass**:
- Der Hauptkörper (10) weist eine Vorderseite (11) und eine Rückseite (12) auf. Zwei Passlöcher (13) sind an dem Hauptkörper (10) derart angeordnet, dass die beiden Passlöcher (13) nacheinander durch die Vorderseite (11) und die Rückseite (12) durchgehen. Eine Schraube (40) dient zum Einsetzen in die Passlöcher (13). Der Hauptkörper (10) ist mit einer Basis (14) versehen, die von der Unterseite des Hauptkörpers (10) nach vorne vorsteht.
- Das erste Halteelement (20) weist ein erstes oberes Befestigungsstück (21) und ein erstes unteres Befestigungsstück (22) auf, die in einem Abstand angeordnet sind. Das erste obere Befestigungsstück (21) und das erste untere Befestigungsstück (22) sind derart hintereinander angeordnet, dass sich das erste obere Befestigungsstück (21) vor dem ersten unteren Befestigungsstück (22) befindet. Das erste obere Befestigungsstück (21) und das erste untere Befestigungsstück (22) sind jeweils mit einem ersten Einstelllangloch (23) versehen, das durch das jeweilige Befestigungsstück (31), (32) hindurchgeht. Das erste obere Befestigungsstück (21) und das erste untere Befestigungsstück (22) sind an deren einem Ende gemeinsam mit einem unilateral umlaufenden ersten Klemmstück (24) verbunden.
- Das zweites Halteelement (30) weist ein zweites oberes Befestigungsstück (31) und ein zweites unteres Befestigungsstück (32) auf, die in einem Abstand angeordnet sind. Das zweite obere Befestigungsstück (31) und das zweite untere Befestigungsstück (32) sind derart hintereinander angeordnet, dass sich das zweite obere Befestigungsstück (31) hinter dem zweiten unteren Befestigungsstück (32) befindet. Das zweite obere Befestigungsstück (31) und das zweite untere Befestigungsstück (32) sind jeweils mit einem zweiten Einstelllangloch (33) versehen, das durch das jeweilige Befestigungsstück (31), (32) hindurchgeht. Das zweite obere Befestigungsstück (31) und das zweite untere Befestigungsstück (32) sind an deren in Bezug auf das erste Klemmstück (24) entfernten Ende mit einem unilateral umlaufenden zweiten Klemmstück (34) gemeinsam verbunden.
- Das erste Halteelement (20) ist an einer Seite des Hauptkörpers (10) derart angeordnet, dass das erste obere Befestigungsstück (21) und das erste untere Befestigungsstück (22) jeweils an der Vorderseite (11) und der Rückseite (12) des Hauptkörpers (10) anliegen und die beiden ersten Einstelllanglöcher (23) mit den beiden Passlöchern (13) fluchten. Das zweite Halteelement (30) ist an der anderen Seite des Hauptkörpers (10) derart angeordnet, dass das zweite obere Befestigungsstück (31) und das zweite untere Befestigungsstück (32) jeweils an der Rückseite (12) und der Vorderseite (11) des Hauptkörpers (10) anliegen und die beiden zweiten Einstelllanglöcher (33) mit den beiden Passlöchern (13) fluchten. Die Schraube (40) wird nacheinander durch die Passlöcher (13), die ersten Einstelllanglöcher (23) und die zweiten Einstelllanglöcher (33) gesteckt und dann an einem Fahrradrahmen eines Fahrrads (50) festgezogen. Dadurch können der Hauptkörper (10), das erste Halteelement (20) und das zweite Halteelement (30) mittels der Schraube (40) miteinander verbunden werden. Die Struktur, die sich aus dem Hauptkörper (10), dem ersten Halteelement (20) und dem zweiten Halteelement (30) zusammensetzt, kann dank der Schraube (40) ohne Schwierigkeiten an dem Fahrrad (50) montiert werden. Auf diese Weise wird ein Raum zur Aufnahme eines Wasserbehälters (60) durch die sich aus dem Hauptkörper (10), dem ersten Halteelement (20) und dem zweiten Halteelement (30) zusammensetzende zusammengebaute Struktur gebildet. Der verstellbare Fahrradhalter ist **dadurch gekennzeichnet, dass** es durch Lockern der Schraube (40) und Bewegen derselben in den ersten Einstelllanglöchern (23) und den zweiten Einstelllanglöchern (33) möglich ist, die Höhe des ersten Halteelements (20) oder des zweiten Halteelements (30) abhängig von einer links- oder rechtshändigen Verwendung anzupassen.

2. Verstellbarer Fahrradflaschenhalter nach Anspruch 1, bei welchem der Hauptkörper (10) ein länglicher Körper ist, der sich vertikal erstreckt.

3. Verstellbarer Fahrradflaschenhalter nach Anspruch 1, bei welchem ein Begrenzungskanal (15) an der Vorderseite (11) des Hauptkörpers (10) derart angeordnet ist, dass die Vorderseite (11) am Boden des Begrenzungskanals (15) gebildet sein kann. Das erste obere Befestigungsstück (21) und das zweite untere Befestigungsstück (32) dienen zum Einstecken in den Begrenzungskanal (15), um eine höhere Stabilität des ersten Halteelements (20) und des zweiten Halteelements (30) zu erreichen, wenn die Höhe dieser Halteelemente eingestellt wird.

4. Verstellbarer Fahrradflaschenhalter nach Anspruch 1, bei welchem ein Befestigungsstück (16) an der Vorderseite (11) des Hauptkörpers (10) derart angeordnet ist, dass das Befestigungsstück (16) nach vorne vorsteht.

5. Verstellbarer Fahrradflaschenhalter nach Anspruch 1, bei welchem eine Vielzahl von Vorsprüngen (17) in einem Abstand zueinander an der Rückseite (12) des Hauptkörpers (10) angeordnet ist und zum Anheben des Hauptkörpers (10) verwendet wird.

6. Verstellbarer Fahrradflaschenhalter nach Anspruch 1, bei welchem eine Vielzahl von Rillen (18) in einem horizontalen Abstand zueinander an der Rückseite (12) des Hauptkörpers (10) angeordnet ist. Mindestens eine horizontale Rippe (25), (35) ist entsprechend an dem ersten unteren Befestigungsstück (22) und dem zweiten oberen Befestigungsstück (31) angeordnet. Dadurch, dass die horizontale Rippe (25),(35) mit den Rillen (18) auf unterschiedlichen Höhen in Eingriff gebracht wird, können das erste Halteelement (20) und das zweite Halteelement (30) in mehreren Schritten feinjustiert werden.

7. Verstellbarer Fahrradflaschenhalter nach Anspruch 1, bei welchem das erste obere Befestigungsstück (21) und das erste untere Befestigungsstück (22) jeweils mittels eines Eckstücks (26) mit dem ersten Klemmstück (24) verbunden sind. Das Eckstück (26) des ersten unteren Befestigungsstücks (22) ist größer als das Eckstück (26) des ersten oberen Befestigungsstücks (21). Das erste obere Befestigungsstück (21) kann dank des Größenunterschieds der Eckstücke (26) leichtgängig vor dem ersten unteren Befestigungsstück (22) platziert werden.

8. Verstellbarer Fahrradflaschenhalter nach Anspruch 1, bei welchem das zweite obere Befestigungsstück (31) und das zweite untere Befestigungsstück (32) jeweils mittels eines Eckstücks (36) mit dem zweiten Klemmstück (34) verbunden sind. Das Eckstück (36) des zweiten oberen Befestigungsstücks (31) ist größer als das Eckstück (36) des zweiten unteren Befestigungsstücks (32). Das zweite untere Befestigungsstück (32) kann dank des Größenunterschieds der Eckstücke (36) leichtgängig vor dem zweiten oberen Befestigungsstück (31) platziert werden.

9. Verstellbarer Fahrradflaschenhalter nach Anspruch 1, bei welchem der Wasserbehälter (60) eine Wasserflasche ist.

10. Verstellbarer Fahrradflaschenhalter nach Anspruch 1, bei welchem der Wasserbehälter (60) eine PET-Flasche ist.

## Revendications

1. Porte-bouteilles ajustable pour bicyclette comprenant un corps principal (10), un premier élément de retenue (20) et un second élément de retenue (30), **caractérisé en ce que** :
- le corps principal (10) présente une face avant (11) et une face arrière (12). Deux trous de fixation (13) sont agencés sur le corps principal (10) de sorte que les deux trous de fixation (13) traversent consécutivement la face avant (11) et la face arrière (12). Une vis (40) doit être insérée dans les trous de fixation (13). Le corps principal (10) est équipé d'une base (14) qui fait saillie vers l'avant depuis la partie inférieure du corps principal (10).
- Le premier élément de retenue (20) présente une première pièce de fixation supérieure (21) et une première pièce de fixation inférieure (22) qui sont disposées à distance. La première pièce de fixation supérieure (21) et la première pièce de fixation inférieure (22) sont agencées l'une après l'autre de sorte que la première pièce de fixation supérieure (21) se trouve devant la première pièce de fixation inférieure (22). La première pièce de fixation supérieure (21) et la première pièce de fixation inférieure (22) sont respectivement pourvues d'un premier trou allongé d'ajustement (23) traversant la pièce de fixation respective (31), (32). La première pièce de fixation supérieure (21) et la première pièce de fixation inférieure (22) sont reliées communément à une première pièce de serrage (24) encerclant unilatéralement leur extrémité.
- Le second élément de retenue (30) présente une seconde pièce de fixation supérieure (31) et une seconde pièce de fixation inférieure (32) qui sont disposées à distance. La seconde pièce de fixation supérieure (31) et la seconde pièce de fixation inférieure (32) sont agencées l'une après l'autre de sorte que la seconde pièce de fixation supérieure (31) se trouve derrière la seconde pièce de fixation inférieure (32). La seconde pièce de fixation supérieure (31) et la seconde pièce de fixation inférieure (32) sont respectivement pourvues d'un second trou allongé d'ajustement (33) traversant la pièce de fixation respective (31), (32). La seconde pièce de fixation supérieure (31) et la seconde pièce de fixation inférieure (32) sont reliées communément à une seconde pièce de serrage (34) encerclant unilatéralement leur extrémité la plus éloignée par rapport à la première pièce de serrage (24).
- Le premier élément de retenue (20) est agencé sur un côté du corps principal (10) de sorte que la première pièce de fixation supérieure (21) et la première pièce de fixation inférieure (22) s'appuient respectivement sur la face avant (11) et la face arrière (12) du corps principal (10) et que les deux premiers trous allongés d'ajustement (23) soient alignés avec les deux trous de fixation (13). Le second élément de retenue (30) est agencé sur un côté du corps principal (10) de sorte que la seconde pièce de fixation supérieure (31) et la seconde pièce de fixation inférieure (32) s'appuient respectivement sur la face arrière (12) et la face avant (11) du corps principal (10) et que les deux premiers trous allongés d'ajustement (33) soient alignés avec les deux trous de fixation (13). La vis (40) est insérée dans les trous de fixation (13), les premiers trous allongés d'ajustement (23) et les seconds trous allongés d'ajustement (33) consécutivement, puis serrée sur le cadre de bicyclette d'une bicyclette (50). Ainsi, le corps principal (10), le premier élément de retenue (20) et le second élément de retenue (30) peuvent être reliés l'un à l'autre au moyen de la vis (40). La structure composée du corps principal (10), du premier élément de retenue (20) et du second élément de retenue (30) peut être montée sur la bicyclette (50) sans difficulté grâce à la vis (40). Ce faisant, un espace destiné à recevoir un récipient d'eau (60) est formé par la structure assemblée constituée du corps principal (10), du premier élément de retenue (20) et du second élément de retenue (30). Le porte-bouteilles ajustable est **caractérisé par le fait qu'**en desserrant la vis (40) et en la déplaçant dans les premiers trous allongés d'ajustement (23) et les seconds trous allongés d'ajustement (33), il est possible de régler la hauteur du premier élément de retenue (20) ou du second élément de retenue (30) en fonction de l'utilisation à la main gauche ou à la main droite.

2. Porte-bouteilles ajustable pour bicyclette selon la revendication 1, dans lequel le corps principal (10) est un corps allongé s'étendant verticalement.

3. Porte-bouteilles ajustable pour bicyclette selon la revendication 1, dans lequel un canal de limitation (15) est agencé sur la surface avant (11) du corps principal (10) de sorte que la face avant (11) puisse être formée sur le fond du canal de limitation (15). La première pièce de fixation supérieure (21) et la seconde pièce de fixation inférieure (32) doivent être insérées dans le canal de limitation (15) pour assurer une plus grande stabilité du premier élément de retenue (20) et du second élément de retenue (30) lors du réglage de la hauteur de ces éléments de retenue.

4. Porte-bouteilles ajustable pour bicyclette selon la revendication 1, dans lequel une pièce de fixation (16) est agencée sur la face avant (11) du corps principal (10) de sorte que la pièce de fixation (16) fasse saillie vers l'avant.

5. Porte-bouteilles ajustable pour bicyclette selon la revendication 1, dans lequel une pluralité de saillies (17) est disposée sur la face arrière (12) du corps principal (10) à une certaine distance l'une de l'autre et est utilisée pour élever le corps principal (10).

6. Porte-bouteilles ajustable pour bicyclette selon la revendication 1, dans lequel une pluralité de saillies (18) est agencée sur la face arrière (12) du corps principal (10) à une distance horizontale l'une de l'autre. Au moins une nervure horizontale (25), (35) est agencée respectivement sur la première pièce de fixation inférieure (22) et la seconde pièce de fixation supérieure (31). En amenant les nervures horizontales (25), (35) à s'engager dans les rainures (18) à des hauteurs différentes, le premier élément de retenue (20) et le second élément de retenue (30) peuvent être ajustés avec précision en plusieurs étapes.

7. Porte-bouteilles ajustable pour bicyclette selon la revendication 1, dans lequel la première pièce de fixation supérieure (21) et la première pièce de fixation inférieure (22) sont reliées à la première pièce de serrage (24) respectivement au moyen d'une pièce d'angle (26). La pièce d'angle (26) de la première pièce de fixation inférieure (22) est plus grande que la pièce d'angle (26) de la première pièce de fixation supérieure (21). La première pièce de fixation supérieure (21) peut être placée en douceur devant la première pièce de fixation inférieure (22) grâce à la différence de taille des pièces d'angle (26).

8. Porte-bouteilles ajustable pour bicyclette selon la revendication 1, dans lequel la seconde pièce de fixation supérieure (31) et la seconde pièce de fixation inférieure (32) sont reliées à la première pièce de serrage (34) respectivement au moyen d'une pièce d'angle (36). La pièce d'angle (36) de la seconde pièce de fixation supérieure (31) est plus grande que la pièce d'angle (36) de la seconde pièce de fixation inférieure (32). La seconde pièce de fixation inférieure (32) peut être placée en douceur devant la seconde pièce de fixation supérieure (31) grâce à la différence de taille des pièces d'angle (36).

9. Porte-bouteilles ajustable pour bicyclette selon la revendication 1, dans lequel le récipient d'eau (60) est une bouteille d'eau.

10. Porte-bouteilles ajustable pour bicyclette selon la revendication 1, dans lequel le récipient d'eau (60) est une bouteille PET.
